Europäisches Patentamt

European Patent Office

Office européen des brevets

(11) Veröffentlichungsnummer: **0 321 914**
**A1**

## (12) EUROPÄISCHE PATENTANMELDUNG

(21) Anmeldenummer: **88121265.8**

(22) Anmeldetag: **20.12.88**

(51) Int. Cl.⁴: **B01D 46/34**

(30) Priorität: **22.12.87 DE 3743561**

(43) Veröffentlichungstag der Anmeldung:
**28.06.89 Patentblatt 89/26**

(84) Benannte Vertragsstaaten:
**AT BE DE FR GB NL**

(71) Anmelder: **C. Deilmann AG**
**Deilmannstrasse 1**
**D-4444 Bad Bentheim(DE)**

(72) Erfinder: **Rothkegel, Heribert, Dipl.-Ing.**
**Böversweg 7**
**D-2900 Oldenburg(DE)**

(74) Vertreter: **Bockermann, Rolf et al**
**Patent- und Rechtsanwälte Dr.-Ing.**
**Stuhlmann Dipl.-Ing. Willert Dr.-Ing.**
**Oidtmann Dipl.-Ing. Bockermann Dipl.-Ing.**
**Schneiders Bergstrasse 159 Postfach 10 24**
**50**
**D-4630 Bochum 1(DE)**

(54) **Verfahren und Vorrichtung zum Abscheiden von Staub aus Heissgasen.**

(57) Staubbeladene Heißgase mit Temperaturen bis zu 1200 °C und mehr werden im Querstrom durch vertikal ausgerichtete Schüttschichten A, B, C geringer Dicke geführt. Die Schüttschichten A, B, C bestehen aus einem hochtemperaturbeständigen, abriebarmen sowie regenerierbaren mineralischen Filtermaterial 12, insbesondere Basalt. In Abhängigkeit von der Staubbeladung des Filtermaterials 12 wird dieses mit Hilfe von Abzugsvorrichtungen 25 gezielt aus den Schüttschichten A, B, G abgezogen, anschließend regeneriert und dann kopfseitig der Schüttschichten A, B, C wieder frisch zugegeben. Der Transport kann über ein Kleinbecherwerk 23 erfolgen. Bei Bedarf können im gereinigten Heißgasstrom bzw. im Bereich unterhalb der Schüttschichten A, B, C Kühleinrichtungen 29 bzw. 31 vorgesehen werden. Diese können als Wärmeaustauscher gestaltet sein.

EP 0 321 914 A1

## Verfahren und Vorrichtung zum Abscheiden von Staub aus Heißgasen

Die Erfindung betrifft einerseits ein Verfahren zum Abscheiden von Staub, insbesondere Feinststaub, aus Heißgasen gemäß den Merkmalen im Oberbegriff des Anspruchs 1.

Andererseits richtet sich die Erfindung auf eine Vorrichtung zum Abscheiden von Staub, insbesondere Feinststaub, aus Heißgasen entsprechend den Merkmalen im Oberbegriff des Anspruchs 6.

Die Abscheidung von Staub, insbesondere Feinststaub, aus heißen Gasen ist nach wie vor mit einer Reihe von Problemen behaftet. Die hierzu bekanntgewordenen Vorschläge stellen daher im Grunde nur unbefriedigende Lösungen für den Hochtemperaturbereich dar. Die angedeuteten Schwierigkeiten machen sich insbesondere dort bemerkbar, wo Heißgase mit Temperaturen bis zu 1200 °C und mehr mit einem Feinststaubanteil bis zu etwa 10 mg/Nm$^3$ und weniger entstaubt werden sollen. Derartige Heißgase, welche z. B. aus Wirbelschichtvergasungs- oder Wirbelschichtverbrennungsprozessen stammen, konnten bislang nicht auf ihrem Temperaturniveau gereinigt der Weiterverwendung in Kesseln, Gasturbinen etc. zugeführt werden.

Für diese Heißgase stand als praktikabelste Verfahrensweise lediglich ein zweistufiges System zur Verfügung. Danach wurden die Heißgase zunächst auf das Temperaturniveau erprobter Standard-Entstaubungssysteme abgekühlt, also möglichst unter 200 °C, um dann in diesen Systemen entstaubt zu werden. Eine solche mehrstufige Verfahrensweise ist naturgemäß mit einem hohen technischen Aufwand sowie erheblichen Energieverlusten verbunden und war in den seltensten Fällen noch wirtschaftlich.

Noch schwieriger stellt sich der Sachverhalt dar, wenn Heißgase mit Reststoffgehalten von unter 10 mg/Nm$^3$ in Folgeanlagen prozeßtechnisch genutzt werden sollen und dafür wieder auf ein entsprechendes hohes Temperaturniveau gebracht werden müssen. Eine derartige nachträgliche Aufheizung auf das ursprüngliche Temperaturniveau vor der Entstaubung ist weder technisch noch wirtschaftlich sinnvoll.

Die vorstehend geschilderten Probleme bestanden sowohl bei den bekannten Schüttschichtfiltern als auch bei dem Granulat-Röhren-Filter der Firma Lurgi gemäß Prospekt "Das neue Granulat-Röhren-Filter", welches außerdem eine Vorreinigung der Rohgase von Grobstaub > 30 μ in Vorzyklonen erforderlich macht.

Der Erfindung liegt die Aufgabe zugrunde, sowohl ein Verfahren als auch eine Vorrichtung zum Abscheiden von Staub, insbesondere Feinststaub, aus Heißgasen zu schaffen, gemäß welchen Heißgase mit Temperaturen bis zu 1200 °C und mehr auf dem jeweiligen Temperaturniveau gereinigt und derart gereinigt unmittelbar der prozeßtechnischen Weiterverarbeitung zugeführt werden können.

Die Lösung des verfahrenstechnischen Teils dieser Aufgabe wird erfindungsgemäß in den im Kennzeichen des Anspruchs 1 aufgeführten Merkmalen gesehen.

Dieses Verfahren erlaubt es nunmehr erstmals hochstaubbeladene Heißgase bis zu etwa 1200 °C und mehr bis auf Reststaubgehalte von weit unter 10 mg/Nm$^3$ zu senken, wobei während der Entstaubung das Temperaturniveau nahezu aufrechterhalten wird und relevante Druckverluste vermieden werden. Folglich können auf diese Weise entstaubte Heißgase unmittelbar der prozeßtechnischen Weiterverarbeitung zugeführt werden, ohne daß hierfür ein besonderer verfahrenstechnischer Aufwand getrieben werden müßte.

Die mit Staub beladenen Heißgase werden nach diesem Verfahren zunächst durch eine gasdurchlässige Prallwand mit einer Anströmfläche geführt, die größer ist als der Querschnitt der Zuströmleitung. An dieser Prallwand werden dann vornehmlich gröbere Partikel abgeschieden, welche z. B. in einen Staub- und Aschesammelbehälter fallen können. Durch diese Vorabscheidung eines größeren (gröberen) Teils der in den Heißgasen enthaltenen Stäube wird eine Entlastung der Schüttschichten herbeigeführt. Nach dem Passieren der Prallwand strömen die Heißgase durch wenigstens zwei Schüttschichten geringer Dicke aus hochtemperaturbeständigem, abriebarmem sowie regenerierbarem Filtermaterial. Der Feinststaub lagert sich an diesem Filtermaterial ab und wird zusammen mit dem Filtermaterial mit einer derartigen Geschwindigkeit quer zum Heißgasstrom bewegt, daß eine sehr feinfühlige Regelung der Druckverluste im Heißgasstrom durch selektives Abziehen des staubbeladenen Filtermaterials am unteren Ende der einzelnen Schüttschichten und Zugabe von regenerierten Filtermaterial kopfseitig der Schüttschichten möglich ist. Auf diese Weise wird eine hohe Entstaubungsleistung gewährleistet, wobei auch prozeßbedingt sich extrem ändernden Staubbeladungen der Heißgase flexibel Rechnung getragen werden kann. Staubstöße im heißen Gasstrom können mit Sicherheit vermieden werden.

Die mindestens zweistufige Filtration der Heißgase in den Schüttschichten erlaubt eine optimale Ausnutzung der aktiven Oberflächen des Filtermaterials unter gezielter Anwendung von dessen mit unterschiedlichen Temperaturniveaus sich ändernden physikalischen Eigenschaften. Gleichzeitig wird die Bildung von Kanälen im Filtermaterial vermieden, durch das Heißgas durchbrechen kann.

Das erfindungsgemäße Verfahren erlaubt ferner eine große Variation des Heißgasvolumenstroms und seiner Druckverhältnisse nicht nur bei extrem niedrigen, sondern auch bei sehr hohen Strömungsgeschwindigkeiten.

Mit Rücksicht darauf, daß der Entstaubungsgrad einer Schüttschicht unter anderem eine Funktion der Strömungsgeschwindigkeit der Heißgase ist, reicht z. B. eine Anströmfläche von nur 0,5 m² aus, um 1260 m³ ᵦ /h durchzusetzen, wobei ein Wirkungsgrad von 99,76 bis 99,88 % erreicht wird.

Neben der Strömungsgeschwindigkeit haben auch die Schüttschichtdicke, die Korngrößenverteilung des Filtermaterials sowie dessen Rauhigkeit und der Druckverlust einen entscheidenden Einfluß auf das Filtervermögen. Da der Druckverlust eine direkte Funktion der Dicke einer Schüttschicht ist und diese Schichtdicke wiederum das Filtervermögen mitbestimmt, kommt ihr eine besondere Bedeutung im Rahmen des erfindungsgemäßen Verfahrens zu. Bei etwa 110 mm Schichtdicke stellt sich ein Optimum zwischen dem Druckverlust und dem Filtervermögen ein. Hier haben interne Messungen gezeigt, daß der Druckverlust einer nicht mit Staub beladenen Schüttschicht nur etwa 10 mm WS beträgt.

Wie vorstehend bereits dargelegt, kann der Druckverlust während des Entstaubungsvorgangs durch das Abziehen von beladenem Filtermaterial bei gleichzeitiger Zufuhr regenerierten Filtermaterials feinfühlig geregelt werden. Da der Grunddruckverlust einer noch nicht staubbeaufschlagten Schüttschicht hierbei durch die Korngrößenverteilung des Filtermaterials bestimmt wird, sollte die Korngröße der Filtermaterialien nicht zu groß und nicht zu klein sein, um auf der einen Seite bei konstantem Filtervermögen keinen überproportionalen Druckverlust zu erzeugen und um andererseits bei konstantem Druckverlust nicht die gegenteilige Wirkung zu erzielen.

Ein weiteres Kriterium für das Filtervermögen ist neben der mineralurgischen Beschaffenheit die Rauhigkeit des Filtermaterials. Eine hohe Oberflächenrauhigkeit garantiert zusammen mit den in Abhängigkeit von der Temperatur unterschiedlichen physikalischen Eigenschaften des Filtermaterials ein besseres Haften des Staubs, wobei die Temperaturbeständigkeit des Filtermaterials hohe Filtrations- und Gastemperaturen sicherstellt.

Unterschiedlichen Staubbelastungen der Heißgase kann über die Anzahl der Schüttschichten Rechnung getragen werden.

Die Merkmale des Anspruchs 2 stellen einen hohen Entstaubungsgrad bei kontinuierlicher Filterung sicher, wobei Staubanreicherungen auf der einzelnen Schüttschicht und im Filtermaterial vermieden werden, folglich hieraus keine Druckverluste resultieren können.

Das gilt insbesondere dann, wenn die Merkmale des Anspruchs 3 zur Anwendung gelangen. Hierbei können durch eine gezielte selektive Bewegung einzelner Teilschichten der Schüttschichten immer die hochstaubbelasteten Schüttschichtpartien vorrangig abgezogen und so stets ein optimaler Entstaubungsgrad der Gesamtschicht erzielt werden, ohne daß ein Staubdurchtritt trotz der zur Bewegung des Filtermaterials notwendigen Auflockerung eintreten kann.

Das erfindungsgemäße Verfahren erlaubt es, die Entstaubung der Heißgase sowohl unter atmosphärischen Bedingungen (Anspruch 4) als auch unter Druck zu betreiben (Anspruch 5). Dabei sind reduzierende oder oxidierende Atmosphären denkbar. Auch eignet sich das Verfahren für die Entstaubung von mit kondensierbaren Bestandteilen beladenen Heißgasen.

Was die Lösung des gegenständlichen Teils der der Erfindung zugrundeliegenden Aufgabe anlangt, so wird diese in den kennzeichnenden Merkmalen des Anspruchs 6 gesehen.

Danach werden in einem sich gegenüber dem Eingangsquerschnitt erweiternden Gehäuse im Anschluß an eine der Vorabscheidung von vornehmlich gröberen Partikeln dienenden gasdurchlässigen Prallwand wenigstens zwei Schüttschichten geringer Dicke im Abstand hintereinander angeordnet. Die Schüttschichten sind zwischen perforierten Wänden gehalten und bestehen aus einem hochtemperaturbeständigen, abriebarmen sowie regenerierbaren Filtermaterial. In Abhängigkeit von der Staubbeladung wird dieses Filtermaterial so selektiv mit Hilfe von geeigneten Abzugsvorrichtungen aus den Schüttschichten abgezogen, daß in den Schüttschichten stets geringe Druckverluste eingestellt werden können. Dazu können Einrichtungen zur ständigen Überwachung der Temperaturen und Drücke im Filtersystem sowie der Volumenbestimmung der Heißgase bzw. der Füllstandsbemessung des Filtermaterials vorgesehen sein.

Das staubbeladene Filtermaterial wird unterhalb der Abzugsvorrichtungen gereinigt und dann in regenerierter Form oberhalb der Schüttschichten diesen wieder zugegeben. Selbstverständlich sind die Ein- und Austragsvorrichtungen ebenso wie das Gesamtsystem gasdicht gestaltet.

Die Erfindung erlaubt es, die Entstaubungsvorrichtung in einer symmetrischen Modul-Bauweise auszubilden. Sie kann dadurch bei im Grunde beliebiger Maßstabsvergrößerung sowohl in Batteriebauweise als auch in Einzel- und Zwillingssystemen für die verschiedensten Anwendungsfälle der Heißgasentstaubung eingesetzt werden. Unter anderem ist es in diesem Zusammenhang denkbar, daß diese Vorrichtung bei Verwendung entsprechender Materialien auch für adsorptive bzw. absorptive Gasreinigungs- und Gastrennungsaufgaben eingesetzt werden kann.

Der Abzug des staubbeladenen Filtermaterials und die Wiederaufgabe des regenerierten Filtermaterials kann sowohl kontinuierlich als auch diskontinuierlich durchgeführt werden.

Die Perforationswände der Schüttschichten können in einer nicht gekrümmten Ebene sowie parallel zueinander verlaufen (Anspruch 7). Denkbar ist aber auch eine gewölbte Gestaltung entsprechend den Merkmalen des Anspruchs 8.

Die Merkmale des Anspruchs 9 erlauben eine einwandfreie Führung des Filtermaterials innerhalb der Schüttschichten und gestatten es darüberhinaus, daß über die gesamte Filterfläche ein gleichmäßig verteilter unentstaubter Heißgasstrom ungehindert durch die zwischen den Lamellen gebildeten, im wesentlichen sich horizontal erstreckenden schlitzartigen Öffnungen treten kann und gleichmäßig verteilt auf die Schüttschichten trifft.

Unter Anwendung der Merkmale des Anspruchs 10 kann den jeweiligen Gasanströmbedingungen gezielt Rechnung getragen werden.

Der Anströmquerschnitt der Schüttschichten kann gemäß den Merkmalen des Anspruchs 11 quadratisch, rechteckig oder kreisförmig ausgebildet sein. Entsprechend ist dann auch das die Schüttschichten umgebende Gehäuse gestaltet.

Zur Aufrechterhaltung des Temperaturniveaus ist das die Schüttschichten umschließende Gehäuse gemäß den Merkmalen des Anspruchs 12 gasdicht gekapselt und einschl. der Nebenaggregate voll wärmegedämmt.

Bei quadratischen oder rechteckig ausgebildeten Anströmquerschnitten der Schüttschichten ist es nach Anspruch 13 zweckmäßig, daß dann das Gehäuse pyramiden- oder kegelförmig gestaltete Gaseintritts- und Gasaustrittsstutzen aufweist. Der Querschnitt dieser Stutzen kann in Abhängigkeit vom durchzusetzenden und zu entstaubenden Heißgasstrom bzw. des zu seiner prozeßtechnischen Weiterverarbeitung weiterzuleitenden gereinigten, also entstaubten Reingasstroms entsprechend unterschiedlich groß gestaltet werden.

In diesem Zusammenhang kann es entsprechend den Merkmalen des Anspruchs 14 ferner von Vorteil sein, den Strömungsquerschnitt dieser Stutzen veränderbar zu gestalten, um möglichst umgehend auf sich verändernde Gasmengen reagieren zu können.

Eine bevorzugte Ausführungsform der Erfindung besteht in den Merkmalen des Anspruchs 15. Basalt vereint nahezu alle positiven Kriterien, die an ein Filtermaterial zur Heißgasentstaubung gestellt werden. Seine Oberflächenrauhigkeit und thermophysikalischen Eigenschaften garantieren das Anhaften des Staubs; seine Hitzebeständigkeit erlaubt hohe Gastemperaturen und seine Korngrößenverteilung innerhalb der Schüttschichten gestattet eine feinfühlige Regelung des Druckverlustes. Außerdem ist Basalt billig und handelsüblich in der gewünschten Korngröße erhältlich. Darüberhinaus ist er leicht vom Staub zu befreien, das heißt zu regenerieren. Im übrigen besitzt er die weitere vorteilhafte Eigenschaft, daß er sowohl in oxidierenden als auch in reduzierenden Atmosphären eingesetzt werden kann.

Als optimale Korngröße für das Basalt-Filtermaterial hat sich bei internen Versuchen gemäß Anspruch 16 eine solche von 0,8 mm bis 1,6 mm herausgestellt. Bei Korngrößen < 0,8 mm ist zwar das Filtervermögen konstant, aber der Druckverlust steigt überproportional an. Bei Korngrößen > 1,6 mm ist die umgekehrte Beobachtung zu machen.

Selbstverständlich ist es in Abhängigkeit von den zu filternden Heißgasen möglich, auch ein anderes Filtermaterial, wie z. B. Lava, AlSi-Oxide, Keramikprodukte oder Korunde einzusetzen (Anspruch 17).

Entsprechend den Merkmalen des Anspruchs 18 können für die Abzugsvorrichtungen beliebige Systeme eingesetzt werden, welche, insbesondere über Stellmotoren, unter dem steuernden und regelnden Einfluß von Einrichtungen zur ständigen Überwachung der Temperaturen und Drücke im System sowie der Volumenbestimmung der Heißgase bzw. der Füllstandsbemessung des Filtermaterials wirksam sind. Auf diese Weise kann in jeder Schüttschicht, ggf. durch gezielten Abzug von Teilschichten in mindestens einer Schüttschicht, in Abhängigkeit von der jeweiligen Staubbeladung das Filtermaterial quer zum Heißgasstrom bewegt, anschließend regeneriert und im vom Staub befreiten Zustand kopfseitig den Schüttschichten wieder zugegeben werden. Hierdurch können das Auftreten von Staubanreicherungen vor und im filternden Material vermieden und die daraus resultierenden Druckverluste unterbunden werden.

Nach Anspruch 19 ist den Abzugsvorrichtungen bevorzugt eine gekapselte Siebmaschine nachgeschaltet. Diese Siebmaschine kann auch bei hohen Temperaturen die erwartete Siebleistung erbringen und ggf. gekühlt werden, um das Filtermaterial einwandfrei und problemlos regenerieren zu können. Denkbar sind aber auch andere geeignete Regenerationssysteme für das Filtermaterial.

Der Staub- und Aschesammelbehälter gemäß Anspruch 20 dient zur Sammlung, Bunkerung und Ausschleusung der Staubpartikelmassen der Schüttschichten. Er kann aber gemäß Anspruch 21 zusätzlich auch zur Aufnahme der an der Prallwand ausgeschiedenen Staubpartikel dienen. Selbstverständlich ist es denkbar, daß für diese vorabausgeschiedenen Staubpartikel auch ein gesonderter Aschebehälter vorgesehen sein kann.

Gemäß den Merkmalen des Anspruchs 22 sieht die Erfindung einen Pufferbunker zwischen dem Regenerationssystem bzw. dem Aschesammelbehälter und einem Vertikalförderer vor. Dieser Pufferbunker kann zum Ausgleich des anfallenden regenerierten Filtermaterials zwischen dem Regenerationssystem und dem Vertikalförderer dienen. Als Vertikalförderer kann beispielsweise ein in höheren Temperaturbereichen problemlos arbeitendes Becherwerk zur Anwendung gelangen.

Oberhalb der Schüttschichten ist nach Anspruch 23 ein mit dem Vertikalförderer verbundener Beschickungsbunker angeordnet. Diesem Beschickungsbunker können beispielsweise eine Abwurfeinrichtung, eine Anschlußschurre sowie eine Zellenradschleuse oder ein anderes geeignetes System für den Eintrag des regenerierten frischen mineralischen Filtermaterials in die Schüttschichten zugeordnet sein.

Schließlich gestattet es die erfindungsgemäße Vorrichtung gemäß den Merkmalen des Anspruchs 24, zur Kühlung des Heißgasstroms Kühleinrichtungen in den von Filtermaterial freien Zwischenräumen oder im Gasaustrittsraum anzuordnen. Dies kann beispielsweise bei der Entstaubung trockener, d. h. kondensatfreier Heißgase von besonderem Vorteil sein, wenn diese Gase nicht auf dem hohen Temperaturniveau einer Brennkammer oder einer Gasturbine, sondern auf niedrigerem Temperaturniveau, z. B. eines Verbrennungsmotors bzw. eines Blockheizkraftwerks mit unter 40 °C zugeführt werden.

Derartige Kühleinrichtungen können aber auch unterhalb der Abzugsvorrichtungen angeordnet werden, wo sie dann der Kühlung des ausgetragenen Filtermaterials dienen (Anspruch 25).

Die Kühleinrichtungen können nach Anspruch 26 vorteilhaft als Wärmeaustauscher ausgebildet sein und so eine zusätzliche Funktion in Form der Wärmerückgewinnung übernehmen.

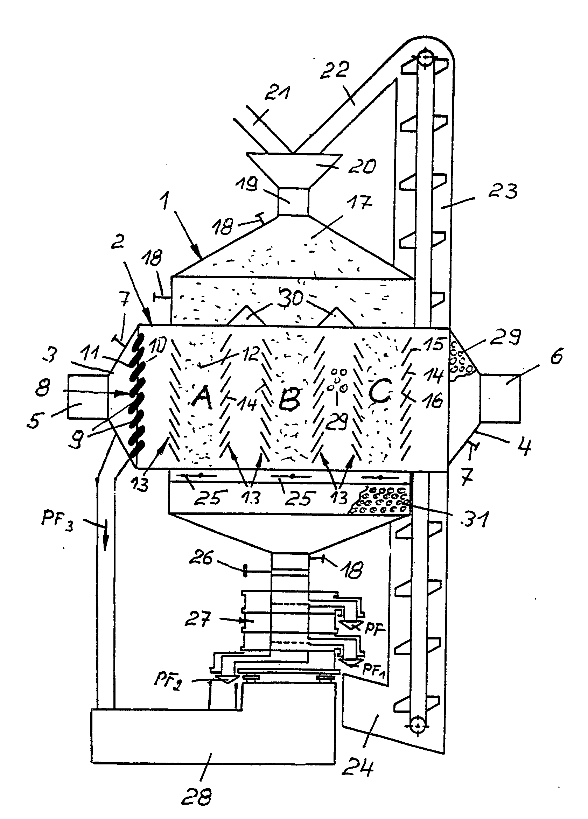

Die Erfindung ist nachfolgend anhand eines in der Zeichnung veranschaulichten Ausführungsbeispiels näher erläutert.

Die dargestellte Vorrichtung zum Abscheiden von Stäuben, und zwar insbesondere Feinststäuben, aus Heißgasen mit Temperaturen bis zu 1200 °C und mehr umfaßt zunächst ein wärmegedämmtes Gehäuse 1. In dem Gehäuse 1 ist in etwa horizontaler Erstreckung ein im Querschnitt rechteckiger Heißgaskanal 2 vorgesehen. Der Heißgaskanal 2 besitzt pyramidenförmig gestaltete Gaseintritts- und Gasaustrittsstutzen 3, 4, die mit der Rohgasleitung 5 bzw. der Reingasleitung 6 verbunden sind.

Sowohl am Gaseintrittsstutzen 3 als auch am Gasaustrittsstutzen 4 sind neben anderen in der Zeichnung nicht näher dargestellten Meßeinrichtungen Sensoren 7 zur Messung des Drucks vorgesehen. Die Sensoren 7 sind mit einer nicht näher veranschaulichten zentralen Steuer- und Regeleinheit des Systems gekoppelt.

Querschnitt und Form der Gaseintritts- und Gasaustrittsstutzen 3, 4 können ggf. veränderbar sein.

Im Bereich des größten Querschnitts des Gaseintrittsstutzens 3 ist eine Prallwand 8 aus im parallelen Abstand übereinander angeordneten Stahl- oder Keramiklamellen 9 vorgesehen. Die Neigung der Lamellen 9 beträgt etwa 75°. Sie sind ferner so angeordnet, daß die Oberkante 10 jeder Lamelle 9 höher liegt als die Unterkante 11 der benachbarten höheren Lamelle 9. Neigung, Abstand und Überdeckungsweite der Lamellen 9 können veränderbar sein.

Hinter der Prallwand 8 befinden sich im Abstand zueinander drei Schüttschichten A, B, C mit einer Schichtdicke von ca. 110 mm. Die Schüttschichten A, B, C bestehen aus einem Filtermaterial 12 aus Basalt mit einer Korngröße zwischen 0,8 mm und 1,6 mm. Die Schüttschichten A, B, C werden von Lamellenwänden 13 begrenzt, deren Lamellen 14 wie die Lamellen 9 der Prallwand 8 aus Stahl oder Keramik bestehen und unter einem Winkel von 75° angeordnet sind. Auch hierbei sind die Oberkanten 15 der Lamellen 14 höher als die Unterkanten 16 der jeweils benachbarten höheren Lamellen 14 vorgesehen. Die Neigung, der Abstand und die Überdeckungsweite der Lamellen 14 können ebenfalls veränderbar sein.

Der Anströmquerschnitt der Lamellenwände 13 beträgt etwa 0,5 m². Dadurch kann ein Heißgasstrom von etwa 1260 m³ʙ /h problemlos durchgesetzt werden.

Oberhalb der Schüttschichten A, B, C ist ein Beschickungsbunker 17 als Bestandteil des wärmegedämmten Gehäuses 1 vorgesehen. Am Beschickungsbunker 17 sind neben anderen in der Zeichnung nicht näher dargestellten Meßeinrichtungen Sensoren 18 zur Ermittlung der verschiedenen Temperaturen bzw. des Füllstands angeordnet. Diese Sensoren 18 stehen ebenfalls mit der zentralen Steuer- und Regeleinheit des Systems in Verbindung, an welche auch die Sensoren 7 angeschlossen sind. Am Kopfende des Beschickungsbunkers 17 können eine Zellenradschleuse 19 oder andere Zuteilvorrichtungen sowie ein Einfülltrichter 20 vorgesehen sein. In den Einfülltrichter 20 mündet eine Leitung 21 für frisches Filtermaterial sowie eine Leitung 22 für regeneriertes Filtermaterial, welches durch ein Kleinbecherwerk 23 aus einem Pufferbunker 24 unterhalb der Schüttschichten A, B, C bzw. einer Siebmaschine 27 nach oben transportiert wird.

Im Bereich unterhalb der Schüttschichten A, B, C sind Abzugsvorrichtungen 25 angeordnet, die in Abhängigkeit von der Staubbeladung des Filtermaterials 12 in den Schüttschichten A, B, C so pneumatisch, hydraulisch, elektrisch oder elektronisch steuer- und regelbar sind, daß der Druckverlust des Heißgasstroms gezielt auf einer vorbestimmten Höhe gehalten werden kann. Dazu sind die Abzugsvorrichtungen 25 mit der nicht näher dargestellten zentralen Steuer- und Regeleinheit des Systems gekoppelt, an welche die Sensoren 7, 18 angeschlossen sind. Parallel zum Abziehen des staubbeladenen Filtermaterials 12 aus den Schüttschichten A, B, C muß auch dafür Sorge getragen werden, daß über das Kleinbecherwerk 23 regeneriertes Filtermaterial 12 den Schüttschichten A, B, C von oben wieder zugegeben wird.

Bei diesem Abziehen können nicht nur die verschiedenen Schüttschichten A, B, C mit unterschiedlichen Bewegungsgeschwindigkeiten und/oder voneinander abweiohendem Bewegungstakt abgezogen werden, sondern es können auch innerhalb jeder Schüttschicht A, B, C, insbesondere der der Prallwand 8 benachbarten ersten Schüttschicht A, gezielt Teilschichten in Abhängigkeit von der Staubbeladung des Filtermaterials 12 selektiv abgezogen werden.

Das aus den Schüttschichten A, B, C abgezogene Filtermaterial 12 gelangt über einen Schieber 26 zu der gekapselten Siebmaschine 27, wo es von dem anhaftenden Staub befreit und anschließend gemäß den Pfeilen PF und PF1 dem Pufferbunker 24 zugeleitet wird. Der Staub wird gemäß dem Pfeil PF2 ausgetragen und kann in denselben Aschesammelbehälter 28 gelangen, in welchen auch die an der Prallwand 8 aus dem Heißgasstrom abgeschiedenen vornehmlich gröberen Partikel gemäß dem Pfeil PF3 gelangen.

Die Zeichnung läßt ferner erkennen, daß im Bereich des Gasaustrittsstutzens 4 eine Kühleinrichtung 29 in Form eines Wärmeaustauschers vorgesehen sein kann. Eine derartige Kühleinrichtung 29 kann auch im Bereich zwischen zwei Schüttschichten A, B, C eingegliedert werden. Dieser Bereich ist im übrigen durch Kegel 30 abgedeckt, welche eine Brückenbildung des regenerierten Filtermaterials 12 im Beschickungsbunker 17 verhindern und deren Zuteilung zu den einzelnen Schüttschichten A, B, C begünstigen.

Ferner ist der Zeichnung zu entnehmen, daß auch im Bereich unterhalb der Abzugsvorrichtungen 25 eine Kühleinrichtung 31, insbesondere in Form eines Wärmeaustauschers, angeordnet sein kann. Mit Hilfe dieser Kühleinrichtung 31 ist es möglich, das staubbeladene Filtermaterial 12 bei Bedarf auf eine Temperatur zu bringen, welche den ungestörten Betrieb der Siebmaschine 27 ermöglicht.

Bezugszeichenaufstellung

1 Gehäuse
2 Heißgaskanal
3 Gaseintrittsstutzen
4 Gasaustrittsstutzen
5 Rohgasleitung
6 Reingasleitung
7 Sensoren
8 Prallwand
9 Lamellen v. 8
10 Oberkanten v. 9
11 Unterkanten v. 9
12 Filtermaterial
13 Lamellenwände
14 Lamellen
15 Oberkanten v. 14
16 Unterkanten v. 14
17 Beschickungsbunker
18 Sensoren an 17
19 Zellenradschleuse
20 Einfülltrichter
21 Leitung
22 Leitung
23 Kleinbecherwerk
24 Pufferbunker
25 Abzugsvorrichtungen
26 Schieber
27 Siebmaschine
28 Aschesammelbehälter
29 Kühleinrichtung
30 Kegel
31 Kühleinrichtung
A Schüttschicht
B Schüttschicht
C Schüttschicht
PF Pfeil
PF1 Pfeil
PF2 Pfeil
PF3 Pfeil

Ansprüche

1. Verfahren zum Abscheiden von Staub, insbesondere Feinststaub, aus Heißgasen, bei welchem die Heißgase quer durch eine zumindest diskontinuierlich verlagerbare Aufschüttung aus einem mineralischen Filtermaterial geringer Korngröße geführt und danach der prozeßtechnischen Weiterverarbeitung zugeleitet werden, und daß der am Filtermaterial angelagerte Feinststaub anschließend vom Filtermaterial getrennt wird, **dadurch gekennzeichnet,** daß die mit Staub beladenen Heißgase unter Querschnittsvergrößerung des Heißgasstroms und Vorabscheidung von vornehmlich gröberen Partikeln zunächst quer durch eine im wesentlichen senkrecht angeordnete gasdurchlässige Prallwand (8) geleitet, dann auf nahezu gleichbleibendem Temperatur- und Druckniveau bei stufenweiser Entstaubung durch mindestens zwei sowohl im parallelen Abstand hintereinander als auch parallel zur Prallwand (8) vorgesehene, etwa vertikal ausgerichtete, von perforierten Wänden (13) begrenzte Schüttschichten (A, B, C) geringer Dicke aus hochtemperaturbeständigem, abriebarmem sowie regenerierbarem Filtermaterial (12) geführt und anschließend in thermisch weitgehend unverändertem Zustand der prozeßtechnischen Weiterverarbeitung zugeleitet werden, wobei das Filtermaterial (12) während der Entstau bung an den unteren Enden der Schüttschichten (A, B, C) in Abhängigkeit von der Staubbeladung mindestens diskontinuierlich selektiv abgezogen, anschließend von dem Staub getrennt und danach den Schüttschichten (A, B, C) kopfseitig wieder zugegeben wird.

2. Verfahren nach Anspruch 1, **dadurch gekennzeichnet,** daß die Schüttschichten (A, B, C) mit unterschiedlichen Geschwindigkeiten und/oder voneinander abweichendem Bewegungstakt abgezogen werden.

3. Verfahren nach Anspruch 1 oder 2, **dadurch gekennzeichnet,** daß einzelne Teilschichten des Filtermaterials (12) mit unterschiedlichen Bewegungsgeschwindigkeiten aus den Schüttschichten (A, B, C) abgezogen werden.

4. Verfahren nach mindestens einem der Ansprüche 1 bis 3, **dadurch gekennzeichnet,** daß die Entstaubung der Heißgase unter atmosphärischen Bedingungen betrieben wird.

5. Verfahren nach mindestens einem der Ansprüche 1 bis 3, **dadurch gekennzeichnet,** daß die Entstaubung der Heißgase unter Druck betrieben wird.

6. Vorrichtung zum Abscheiden von Staub, insbesondere Feinststaub, aus Heißgasen, welche innerhalb eines Gehäuses eine Aufschüttung aus einem mineralischen Filtermaterial geringer Korngröße aufweist, welches im Querstrom von den Heißgasen beaufschlagt ist, und daß der angelagerte Staub zumindest diskontinuierlich von dem Filtermaterial trennbar ist, **gekennzeichnet durch** folgende Merkmale:

a) die Aufschüttung ist durch mindestens zwei im parallelen Abstand hintereinander angeordnete Schüttschichten (A, B, C) geringer Dicke aus hochtemperaturbeständigem, ab riebarmem sowie regenerierbarem Filtermaterial (12) gebildet, die von im wesentlichen vertikal ausgerichteten perforierten Wänden (13) begrenzt sind,

b) vor der im Heißgasstrom liegenden ersten Schüttschicht (A) ist eine weitgehend senkrecht gestellte gasdurchlässige Prallwand (8) angeordnet,

c) vor der Prallwand (8) ist ein sich in Strömungsrichtung der Heißgase erweiternder Kanalabschnitt (3) und hinter der in Strömungsrichtung liegenden letzten Schüttschicht (C) ist ein sich verengender Kanalabschnitt (4) vorgesehen,

d) den Schüttschichten (A, B. C) sind in Abhängigkeit von der Staubbeladung des Filtermaterials (12) wirksame Abzugsvorrichtungen (25) zugeordnet,

e) den Abzugsvorrichtungen (25) ist eine Reinigung (27) des Filtermaterials (12) nachgeschaltet,

f) zwischen der Reinigung (27) und dem Kopfende der Schüttschichten (A, B, C) ist eine Transporteinrichtung (23) für das Filtermaterial (12) vorgesehen.

7. Vorrichtung nach Anspruch 6, **dadurch gekennzeichnet,** daß die Perforationswände (13) der Schüttschichten (A, B, C) parallel zueinander verlaufen.

8. Vorrichtung nach Anspruch 6, **dadurch gekennzeichnet,** daß die Perforationswände (13) der Schüttschichten (A, B, C) gewölbt ausgebildet sind.

9. Vorrichtung nach mindestens einem der Ansprüche 6 bis 8, **dadurch gekennzeichnet,** daß die Perforationswände (13) der Schüttschichten (A, B, C) und/oder die Prallwand (8) aus im parallelen Abstand übereinander gegliederten Stahl- oder Keramiklamellen (14, 9) bestehen. wobei die Oberkante (10, 15) jeder Lamelle (9, 14) höher als die Unterkante (11, 16) der benachbarten höheren Lamelle (9, 14) angeordnet ist.

10. Vorrichtung nach Anspruch 9, **dadurch gekennzeichnet,** daß die Neigungswinkel der Lamellen (9, 14) und/oder ihr Abstand voneinander veränderbar ist.

11. Vorrichtung nach mindestens einem der Ansprüche 6 bis 10, **dadurch gekennzeichnet,** daß der Anströmquerschnitt der Schüttschichten (A, B, C) quadratisch, rechteckig oder kreisförmig ausgebildet ist.

12. Vorrichtung nach mindestens einem der Ansprüche 6 bis 11, **dadurch gekennzeichnet,** daß das die Schüttschichten (A, B, C) umschließende Gehäuse (1) gasdicht gekapselt und einschl. Nebenaggregate wärmegedämmt ist.

13. Vorrichtung nach mindestens einem der Ansprüche 1 bis 12, **dadurch gekennzeichnet,** daß die sich in Strömungsrichtung der Heißgase erweiternden und verengenden Kanalabschnitte des Gehäuses (1) durch pyramiden-oder kegelförmig gestaltete Gaseintritts- und Gasaustrittsstutzen (3, 4) gebildet sind.

14. Vorrichtung nach Anspruch 13, **dadurch gekennzeichnet,** daß der Strömungsquerschnitt der Gaseintritts- und Gasaustrittsstutzen (3, 4) veränderbar ist.

15. Vorrichtung nach mindestens einem der Ansprüche 6 bis 14, **dadurch gekennzeichnet,** daß das Filtermaterial (12) aus einer durch Basalt gebildeten Partikelmasse besteht.

16. Vorrichtung nach Anspruch 15, **dadurch gekennzeichnet,** daß die Korngröße des Basalt-Filtermaterials (12) 0,8 mm bis 1,6 mm beträgt.

17. Vorrichtung nach mindestens einem der Ansprüche 6 bis 14, **dadurch gekennzeichnet,** daß das Filtermaterial (12) aus Lava, Al-Si-Oxiden, Keramikprodukten oder Korunden besteht.

18. Vorrichtung nach Anspruch 6, **dadurch gekennzeichnet,** daß die Abzugsvorrichtungen (25) aus Schiebern, Drehteilen, Austragsschnecken, Zellenradschleusen oder Klappen bestehen, die in Abhängigkeit von der Staubbeladung des Filtermaterials (12) mechanisch, pneumatisch, hydraulisch, elektrisch oder elektronisch steuer- und regelbar sind.

19. Vorrichtung nach Anspruch 6 oder 18, **dadurch gekennzeichnet,** daß die Abzugsvorrichtungen (25) mit einem Regenerationssystem (27) für das Filtermaterial (12), insbesondere mit einer gekapselten Siebmaschine (27), gekoppelt sind.

20. Vorrichtung nach Anspruch 6 oder 19, **dadurch gekennzeichnet,** daß dem Regenerationssystem (27) für das Filtermaterial (12) ein Staub- und Aschesammelbehälter (28) nachgeordnet ist.

21. Vorrichtung nach Anspruch 20, **dadurch gekennzeichnet,** daß der Staub- und Aschesammelbehälter (28) zur Aufnahme der an der Prallwand (8) ausgeschiedenen Staubpartikel vorgesehen ist.

22. Vorrichtung nach mindestens einem der Ansprüche 19 bis 21, **dadurch gekennzeichnet,** daß zwischen dem Regenerationssystem (27) und einem Vertikalförderer (23) ein Pufferbunker (24) für regeneriertes Filtermaterial (12) vorgesehen ist.

23. Vorrichtung nach Anspruch 22, **dadurch gekennzeichnet,** daß oberhalb der Schüttschichten (A, B, C) ein mit dem Vertikalförderer (23) verbundener Beschickungsbunker (17) angeordnet ist.

24. Vorrichtung nach mindestens einem der Ansprüche 6 bis 23, **dadurch gekennzeichnet,** daß in den Bereich zwischen zwei Schüttschichten (A, B bzw. B, C) oder mit Bezug auf die Strömungsrichtung der Heißgase hinter die letzte Schüttschicht (C) mindestens eine Kühleinrichtung (29) eingegliedert ist.

25. Vorrichtung nach mindestens einem der Ansprüche 6 bis 24, **dadurch gekennzeichnet,** daß im Bereich unterhalb der Abzugsvorrichtungen (25) wenigstens eine Kühleinrichtung (31) vorgesehen ist.

26. Vorrichtung nach Anspruch 24 oder 25, **dadurch gekennzeichnet,** daß die Kühleinrichtung (29, 31) als Wärmeaustauscher ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 300 972 (CURTISS-WRIGHT CORP.) * Seiten 10,11; Seite 12, letzter Absatz - Seite 13, Absatz 1; Seite 15, letzter Absatz - Seite 16; Figuren 1,5 * | 1-7,12, 16 | B 01 D 46/34 |
| Y | EP-A-0 213 298 (KERNFORSCHUNGSZENTRUM KARLSRUHE GmbH) * Seiten 6,7; Figur 2 * | 1-7,12, 16 | |
| A | DE-A-3 304 344 (KERAMIKANLAGEN) * Ansprüche 1,4,6-8,11,12; Seite 7; Figuren 1,2 * | 1-4,6,7 ,11,13, 17-20, 22,23 | |
| A | PATENT ABSTRACTS OF JAPAN, Band 11, Nr. 259 (C-441)[2706], 21. August 1987; & JP-A-62 61 613 (MITSUI MIIKE KAKOKI K.K.) 18-03-1987 * Zusammenfassung * | 17 | |
| A | PATENT ABSTRACTS OF JAPAN, Band 4, Nr. 89 (C-16)[571], 25. Juni 1980, Seite 100 C16; & JP-A-55 54 017 (SHINTOU DASUTOKOREKUTAA K.K.) 21-04-1980 * Zusammenfassung * | | RECHERCHIERTE SACHGEBIETE (Int. Cl.4)  B 01 D 46/00 B 01 D 53/00 B 01 J 8/00 |

Der vorliegende Recherchenbericht wurde für alle Patentansprüche erstellt

| Recherchenort | Abschlußdatum der Recherche | Prüfer |
|---|---|---|
| DEN HAAG | 21-02-1989 | POLESAK, H.F. |